# EUROPEAN PATENT APPLICATION

(11) **EP 2 184 489 A2**
(43) Date of publication of application: **12.05.2010**
(21) Application number: 09175064.6
(22) Date of filing: 04.11.2009
(51) Int. Cl.: F03D 11/02

(54) **Drive train supporting structure for a wind turbine**

(30) Priority: 07.11.2008 US 266754
(71) Applicant: General Electric Company, Schenectady, NY 12345 (US)
(72) Inventor: Benito, Pedro, D-48429, Rheine (DE); Yegro, Eugenio, 28979, Madrid (ES)
(74) Representative: Bedford, Grant Richard

(57) **Abstract**

A drive train supporting arrangement (200) for a wind turbine (100) including a drive train is provided. The drive train supporting arrangement (200) includes a hinge connection means (201) adapted for pivotably supporting the drive train, a self-supporting structure (207) adapted for supporting the hinge connection means (201) and a lattice structure adapted for supporting a counterweight-damper mass (203). The counterweight-damper mass (203) is connected to and acts on the drive train.

## Description

The present disclosure generally relates to wind turbines adapted for converting mechanical wind energy into electrical output energy, and in particular relates to a drive train supporting structure for a wind turbine.

A drive train of a wind turbine typically includes a rotor having a plurality of rotor blades, a hub, a speed adapter unit or a gear box and a generator. Typically, the supporting structure for said drive train is greatly contributes to the overall weight of an upper part of the wind turbine. During the operation of the wind turbine, e.g. when the rotor having the plurality of rotor blades is rotating, vibrations might occur.

Typically, the rotor rotates about a main axis which is oriented horizontally wherein the tilt, e.g. the horizontal orientation of the main axis of the rotor, cannot be changed. In order to adapt operation parameters of the wind turbine to environmental conditions, a yawing angle, e.g. an angle of rotation of a machine nacelle about a vertical axis, e.g. the tower axis and a pitch angle, e.g. a rotation of the rotor blades about their longitudinal axis, can be adjusted.

In view of the above, according to a first aspect of the present invention a drive train supporting arrangement for a wind turbine including a drive train is provided, said drive train supporting arrangement including a hinge connection means adapted for pivotably supporting the drive train, a self-supporting structure adapted for supporting the hinge connection means, and a first lattice structure adapted for supporting a counterweight, the counterweight being connected to and acting on the drive train.

According to another aspect a wind turbine including a drive train and a drive train supporting arrangement is provided, said drive train supporting arrangement including a hinge connection means adapted for pivotably supporting the drive train, a self-supporting structure adapted for supporting the hinge connection means, and a first lattice structure adapted for supporting a counterweight-damper mass, the counterweight-damper mass being connected to and acting on the drive train.

According to yet another aspect a method for adjusting a tilt angle of a drive train of a wind turbine including a drive train and a drive train supporting arrangement is provided, said method including determining a wind shear at the location of the wind turbine, measuring an actual tilt angle of the drive train of the wind turbine, and changing the tilt angle of the drive train as a function of the actual tilt angle and the measured wind shear.

Further exemplary embodiments are according to the dependent claims, the description and the accompanying drawings.

Various aspects and embodiments of the present invention will now be described in connection with the accompanying drawings, in which:
Fig. 1 is a side view of a wind turbine having a tower and a machine nacelle arranged rotatably about a vertical axis, wherein the machine nacelle includes a vibration damper unit, according to a typical embodiment;
Fig. 2 is a top view of the wind turbine shown in Fig. 1, wherein an orientation of a rotor axis of the rotor is shown to be adjustable with respect to a yaw angle;
Fig. 3 is a side view of a drive train supporting arrangement, wherein the drive train includes a speed adapter unit and a generator, according to a typical embodiment;
Fig. 4 is a side view of a drive train supporting arrangement, wherein the drive train includes a speed adapter unit and a generator, according to another typical embodiment;
Fig. 5 is a side view of a drive train supporting arrangement, wherein the drive train includes a direct drive generator, according to yet another typical embodiment;
Fig. 6 is a side view of a drive train supporting arrangement, wherein the drive train includes a direct drive generator, according to yet another typical embodiment; and
Fig. 7 illustrates a flowchart explaining a method for adjusting a tilt angle of a rotor axis of a wind turbine in dependence of a measured wind shear.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

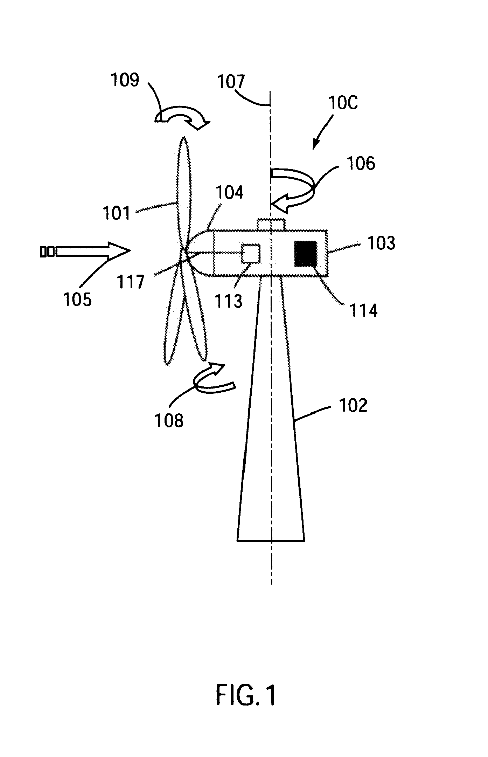

Fig. 1 illustrates a wind turbine 100 viewed from one side according to a typical embodiment. The wind turbine 100 includes a tower and a machine nacelle 103 arranged rotatably on the top of the tower 102. The machine nacelle includes a rotor having at least one rotor blade 101, a hub 104 and a main shaft 117. Typically, the drive train of the wind turbine 100 includes the main shaft 117, the rotor 104 and a gear box generator arrangement (described herein below). The machine nacelle 103 may be rotated about a vertical axis 107 such that the rotor blades and the main shaft 117 respectively can be oriented towards a wind direction 105 of the incoming wind. In dependence of the strength of the incoming wind, a bending moment 109 can occur at the entire wind turbine. The bending moment 109 acts about a typically horizontal axis being perpendicular to the vertical axis 107 and a rotor axis 115.

In order to obtain a good energy conversion from wind energy into rotational energy, the at least one rotor blade 101 can be adjusted with respect to a pitch angle 108. The pitch angle 108 is adjusted by rotating a respective rotor blade about its longitudinal axis. Thus, the pitch angle may determine loads as a function of the strength of the incoming wind 105 onto a specific rotor blade.

According to a typical embodiment, a vibration damper unit 114 is provided which is adapted to damp vibrations caused by varying wind forces and rotational influences. These vibrations (or oscillations) may act on the entire wind turbine 100, e.g. several portions of the wind turbine are vibrating in a combined mode. Typically, these oscillations are dependent on the design of the wind turbine 100 and on meteorological conditions.

The vibration damper unit is arranged at a position where the oscillations may be effectively damped. Therefore, specific vibration frequencies of the mechanical arrangement of portions of the wind turbine 100 or of the entire wind turbine 100 can be damped. In order to be effective, such kind of load reduction system typically is installed atop the tower 102, e.g. inside or outside the machine nacelle 103. Thus, it is possible that the vibration damper unit rotates about the vertical axis 107 together with the drive train of the wind turbine 100. A counterweight which may be formed as a counterweight-damper mass may be provided as a liquid tuned damper. In a typical embodiment the liquid tuned damper may include water.

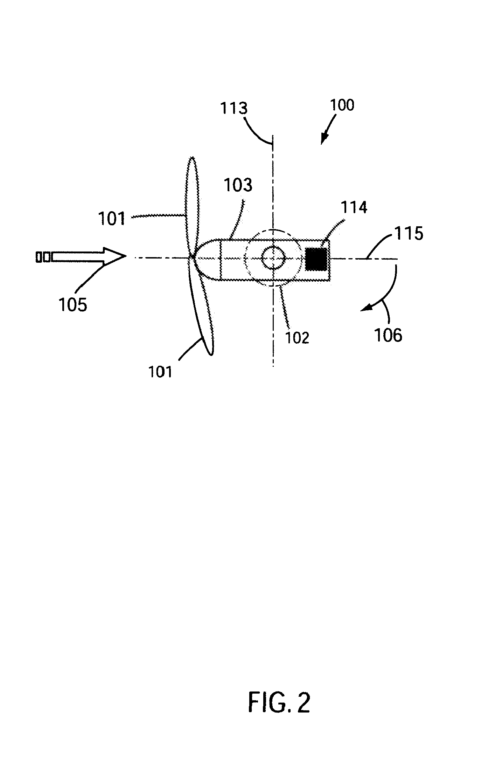

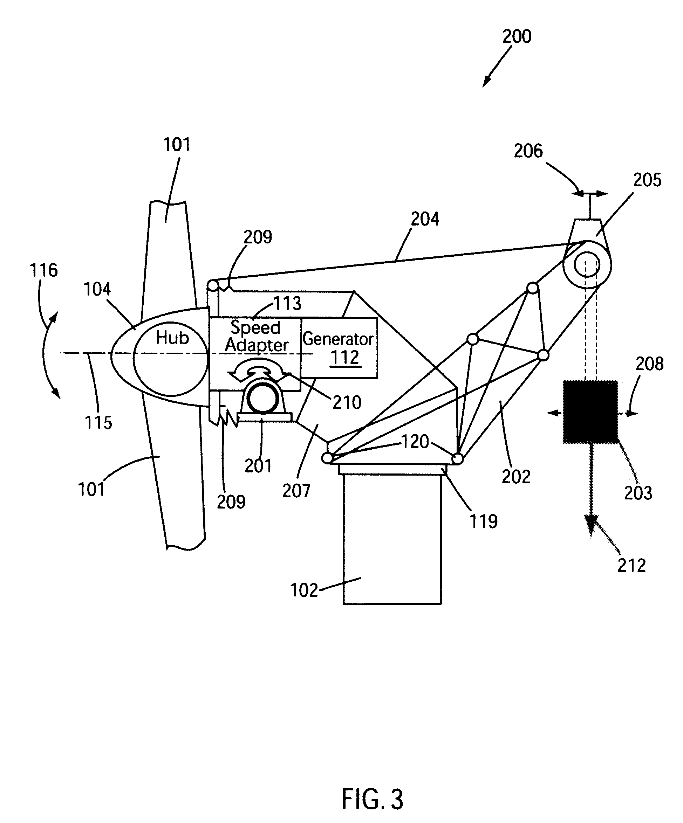

Fig. 2 is a top view of the wind turbine 100 shown in Fig. 1. A rotor axis 115 is defined by the axis of the main shaft 117 (Fig. 1) and can be directed towards the incoming wind direction 105 by changing the yaw angle 106. When the rotor having the plurality of rotor blades 101 rotates, vibrations may occur which are damped by the an active or passive vibration damper unit 114. If wind shear is present at the location of the wind turbine, e.g. if the wind velocity in lower regions near ground is less than the wind velocity in higher regions high above ground, according to a typical embodiment, the rotor axis 115 is not only adjusted with respect to the incoming wind direction 105 by changing the yaw angle 106, but also with respect to an axis which is perpendicular to the vertical axis 107 (Fig. 1) and the rotor axis 115. This axis is called the tilt axis, and the angle of rotation about this tilt axis is the tilt angle 116 (see below Fig. 3-6).

In order to rotate the drive train of the wind turbine 100 about the tilt axis 118 being perpendicular to the vertical axis 107 and the rotor axis 115, a drive train supporting arrangement is provided according to typical embodiments shown in Fig. 3-6.

Fig. 3 illustrates a drive train supporting arrangement 200 according to a typical embodiment. A self-supporting structure 207 is arranged atop the tower 102. The self-supporting structure 207 is mounted at a tower bearing 119 by means of mounting units 120. A hinge connection means 201 is fixed to the self-supporting structure 207 at a front end thereof, e.g. at an end directed towards the hub 104 of the wind turbine 100. The hinge connection means 201 may include a damping mechanism such as an oil damper unit.

In the typical embodiment shown in Fig. 3, the drive train of the wind turbine 100 includes the rotor having a plurality of rotor blades 101 and the rotor axis 115, a speed adapter unit 113 and a generator 112. The speed adapter unit 113 is used to adapt a rotational speed of the rotor to a required input rotational speed of the generator 112. In a typical embodiment, the speed adapter unit may include a gear box. The drive train including the rotor, the speed adapter unit 113 and the generator 112 is adapted for a connection to the self-supporting structure 207 wherein the connection is rotatable about a typically horizontal axis.

Therefore, the hinge connection means 201 is adapted for pivotly supporting the drive train. A tilt angle detection unit 210 is provided in order to measure an actual tilt angle 116, and/or a change of the tilt angle 116. the tilt angle 116 is thus a measure of the orientation of the rotor axis 115. The self-supporting structure may form a part of a machine nacelle 103 (shown in Fig. 1 and 2) and may include a closed housing by applying flexible bellows 209 which are connected to a tiltable part of the drive train. A counterforce is provided by a counterweight 203 which is connected to a first lattice structure 202. The gravitational force 212 of the counterweight 203 is transferred to the tiltable drive train by means of a cable 204. Moreover the counterweight may act as a damper mass for damping vibrations. Such kind of counterweight-damper mass may be movable with respect to the drive train in directions 208, e.g. horizontally such that wind thrust at the rotor blades may be compensated.

As shown in Fig. 3, the first lattice structure 202 is also connected to the mounting units 120 which are used to connect the self-supporting structure 207 to the tower bearing 119. By changing the weight value of the counterweight 203, it is possible to change the force acting onto the cable 204 and thus to change the tilt angle 116 of the entire drive train. More conveniently, the counterweight 203 is moved in a direction shown by arrows 208 in order to adjust the tilt angle 116 of the rotor axis 115 and the drive train, respectively. The moment which acts onto the rotor axis 115 is determined by the weight of the counterweight 203 and the distance between the counterweight and the tower axis 107 (Fig. 1).

At its top end, the first lattice structure 202 may include an anemometer support unit 205 for supporting an anemometer 206. The anemometer support unit 205 is adapted for arranging the anemometer 206 distant from air turbulences caused by the rotating rotor blades. The anemometer 206 which is installed at this location distant from the main rotor having the plurality of rotor blades 101 is less influenced by wind deviations caused by the rotating rotor blades 101 and thus provides a better measurement accuracy as compared to anemometers which are installed closer to the tower axis (vertical axis) 107.

It is noted here that besides adapting the tilt angle 116 of the rotor axis 115 with respect to a horizontal wind shear of the incoming wind 105, the tilt angle 116 of the rotor axis 115 may be adapted according to loads measured at different locations within the wind turbine 100. Furthermore, it is noted that the drive train supporting arrangement 200 having a self-supporting structure 207 and a first lattice structure 202 is a lightweight construction which saves yaw energy and eases installation of the wind turbine. The movement of the counterweight in the counterweight movement direction 208 may be used to counteract thrust changes caused by the incoming wind 105.

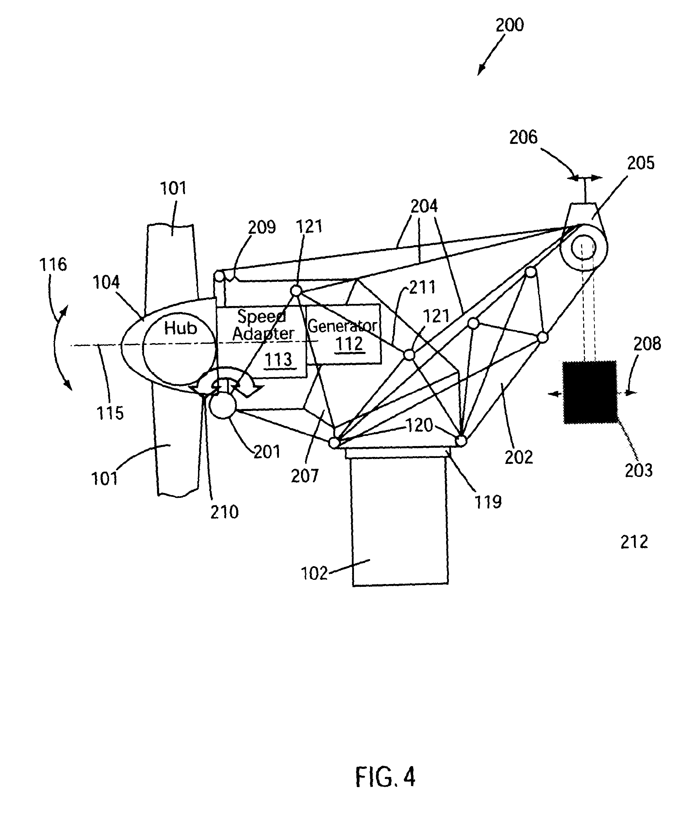

Fig. 4 illustrates a drive train supporting arrangement for a drive train including the rotor, the speed adapter 113 and the generator 112, according to another typical embodiment.

It is noted here that components or steps which have been described with respect to previous drawings, are not repeated in the following sections in order to avoid a redundant description. Furthermore, an explanation of reference numerals which have been explained in previous drawings in the description, are not extensively repeated in the description of succeeding drawings.

As in the typical embodiment shown in Fig. 3, a self-supporting structure 207 is provided which is connected to the tower bearing 119 of the tower 102 by means of at least two mounting units 120.

Again, the self-supporting structure 207 is at a fixed position wherein in the embodiment shown in Fig. 4 the hinge connection means 201 is supported by a second lattice structure 211 which is connected by second mounting units 121. The drive train now is rotatable about the axis of the hinge connection means 201 which is connected to the drive train at the front end of the speed adapter 113. As in the embodiment shown with respect to Fig. 3, a first lattice structure 202 is provided which is connected to the tower bearing 119 by means of the mounting units 120.

The counterweight 203 now acts on three different portions of a cable 204. The first portion of the cable 204 is connected to the drive train, wherein the second and third portions of the cable 204 are connected to the second lattice structure 211.

As the first lattice structure 202, the second lattice structure 211 is lightweight such that the entire drive train supporting arrangement 200 has a reduced weight as compared to a machine nacelle without any lattice structure.

A flexible bellow 209 is provided as a connection means between the drive train and the fixed self-supporting structure 207. Again, the counterweight 203 may be moved in a direction of the arrows 208 such that the tilt angle 116 of the rotor axis 115 may be varied.

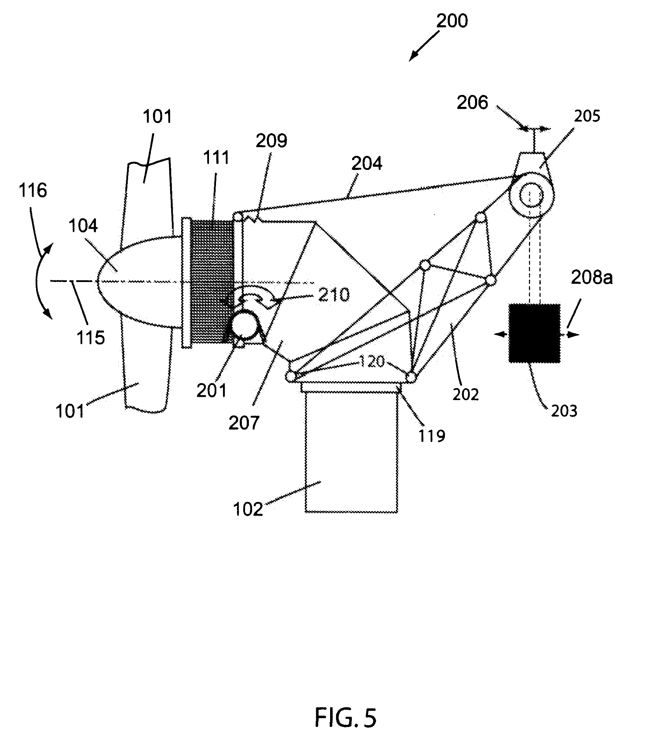

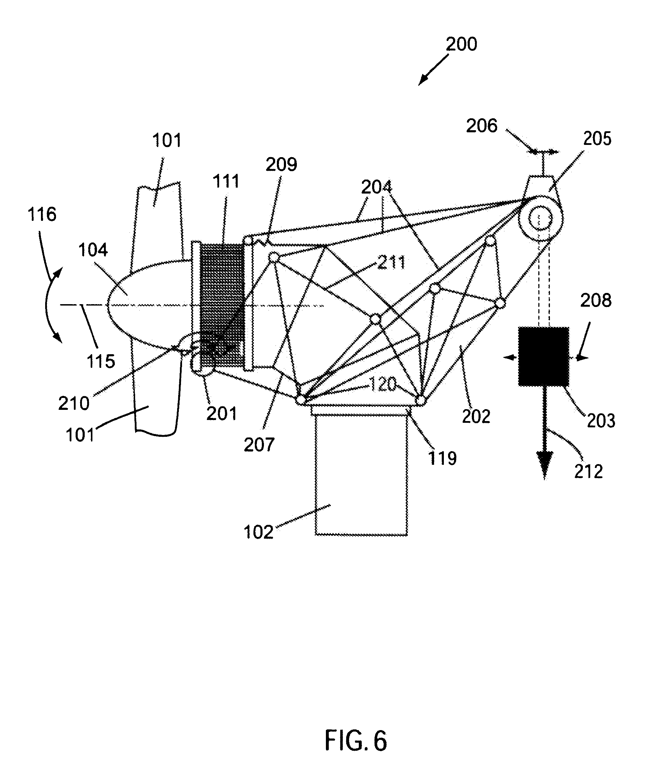

In the following, drive train supporting arrangements 200 according to further typical embodiments are explained with respect to Fig. 5 and 6. Fig. 5 and 6 correspond to Fig. 3 and 4 with respect to the drive train supporting arrangement whereas the difference of Fig. 5 and 6 as compared to Fig. 3 and 4 is that the combination of the speed adapter 113 and the generator 112 (Fig. 3 and 4) has been replaced by a direct drive generator 111 (Fig. 5 and 6).

More precisely, Fig. 5 corresponds to Fig. 3 wherein the speed adapter 113 and the generator 112 have been replaced by the direct drive generator 111. Fig. 6 corresponds to Fig. 4 wherein the speed adapter 113 and the generator 112 have been replaced by the direct drive generator 111. Thus, the drive train supporting arrangement 200 of Fig. 5 corresponds to the drive train supporting arrangement of Fig. 3, whereas the drive train supporting arrangement of Fig. 6 corresponds to the drive train supporting arrangement 200 of Fig. 4.

As shown in Fig. 5, the hinge connection 201 is connected to the self-supporting structure 207 such that the direct drive generator 111 is tiltable about a horizontal axis (the tilt axis 118; see Fig. 2) which is perpendicular to both the vertical axis 107 of the wind turbine (Fig. 1) and the rotor axis 115. A flexible bellow 209 is provided for connecting the direct drive generator 111 to the self-supporting structure 207. At the upper end of the first lattice structure 202, an anemometer support unit 205 with an anemometer 206 is provided, as explained with respect to Fig. 3.

Fig. 6 illustrates a drive train supporting arrangement 200 according to yet another typical embodiment. In addition to the first lattice structure 202, a second lattice structure 211 is provided which is connected to the self-supporting structure 207 at the location of the hinge connection means 201. A tilt angle detection unit 210 detects the tilt angle 116 of the drive train including the rotor having a plurality of rotor blades 101 and the hub 104 and the direct drive generator 111 about the tilt axis 118 (Fig. 2).

As in the embodiment shown with respect to Fig. 4, three portions of a cable 204 are provided. A first portion of the cable 204 transfers the gravitational force 212 of the counterweight 203 to the drive train, wherein the second and third portions of the cable 204 hold the second lattice structure 211.

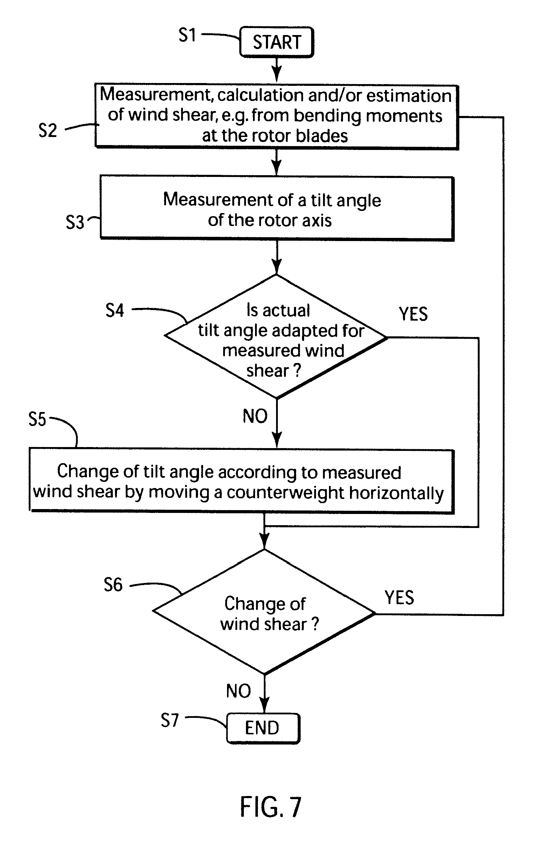

Fig. 7 is a flowchart illustrating a method for adjusting a tilt angle of a drive train of a wind turbine 100 according to a typical embodiment. At step S1, the procedure is started.

At step S2, the wind at different heights of the wind turbine 100 is measured. Furthermore, a calculation and/or estimation of wind shear, e.g. from bending moments at the rotor blades, is carried out. Such kind of wind measurement results in a wind shear determination which may be used for appropriate adjustment of the rotor axis 115. The procedure advances to step S3 where the actual tilt angle 116 of the rotor axis 115 is measured. If the actual tilt angle 116 is adapted to the measured wind shear ("Yes" at step S4), the procedure proceeds to step S6.

It is noted here that wind shear can be measured using anemometers at different hub heights. Moreover wind shear can be calculated from measurements of loads or deflections of at least one rotor blade.

When it is determined at step S4 that the actual tilt angle 116 is not adapted for the measured wind shear ("No" at step S4), then the procedure advances to step S5 where the tilt angle is changed according to the measured wind shear. The tilt angle may be changed by moving the counterweight 203 in the counterweight moving direction 208 (see Fig. 3-6).

Then the procedure advances to step S6 where it is determined whether the wind shear has changed or not. The determination of any change of wind shear again may be performed by wind velocity sensors installed at different heights at the wind turbine 100. If the wind shear has changed ("Yes" at step S6), the procedure returns to step S2, and the procedural steps S2 to S5 (S4) are repeated. If it is determined that the wind shear did not change ("No" at step S6), the procedure is ended at step S7.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and non-limiting.

Various aspects and embodiments of the present invention are defined by the following numbered clauses:
1. A drive train supporting arrangement adapted for a wind turbine including a drive train, said drive train supporting arrangement comprising:
   a hinge connection means adapted for pivotably supporting the drive train;
   a self-supporting structure adapted for supporting the hinge connection means; and
   a first lattice structure adapted for supporting a counterweight,
   the counterweight being connected to and acting on the drive train.
2. The drive train supporting arrangement in accordance with clause 1, wherein the counterweight is formed as a counterweight-damper mass which is adapted to tilt the drive train about a horizontal axis.
3. The drive train supporting arrangement in accordance with any preceding clause, wherein the counterweight is connected to the drive train by means of at least one cable.
4. The drive train supporting arrangement in accordance with any preceding clause, wherein the hinge connection means comprises a damping mechanism.
5. The drive train supporting arrangement in accordance with any preceding clause, wherein the damping mechanism comprises an oil damper unit.
6. The drive train supporting arrangement in accordance with any preceding clause, wherein the counterweight is movable with respect to the drive train such that a variable force may be applied at the drive train.
7. The drive train supporting arrangement in accordance with any preceding clause, wherein a second lattice structure is provided which is adapted for supporting the drive train.
8. The drive train supporting arrangement in accordance with any preceding clause, wherein the second lattice structure is connected to at least one cable which is connected to the counterweight.
9. The drive train supporting arrangement in accordance with any preceding clause, wherein a flexible bellow is provided that connects the drive train to the self-supporting structure.
10. The drive train supporting arrangement in accordance with any preceding clause, wherein the counterweight-damper mass is provided as a liquid tuned damper.
11. A wind turbine comprising a drive train and a drive train supporting arrangement, said drive train supporting arrangement comprising:
   a hinge connection means adapted for pivotably supporting the drive train;
   a self-supporting structure adapted for supporting the hinge connection means; and
   a first lattice structure adapted for supporting a counterweight-damper mass,
   the counterweight-damper mass being connected to and acting on the drive train.
12. The wind turbine in accordance with clause 11, wherein the drive train supporting arrangement is part of a machine nacelle.
13. The wind turbine in accordance with clause 11 or 12, wherein the counterweight-damper mass is arranged outside the machine nacelle.
14. The wind turbine in accordance with any of clauses 11 to 13, wherein the counterweight-damper mass is arranged within the machine nacelle.
15. The wind turbine in accordance with any of clauses 11 to 14, wherein an anemometer support unit is provided at the first lattice structure and is adapted to support an anemometer.
16. The wind turbine in accordance with any of clauses 11 to 15, wherein a speed adapter unit is provided between the rotor and the generator.
17. A method for adjusting a tilt angle of a drive train of a wind turbine comprising a drive train and a drive train supporting arrangement, said method comprising:
   determining a wind shear at the location of the wind turbine;
   measuring an actual tilt angle of the drive train of the wind turbine; and
   changing the tilt angle of the drive train as a function of the actual tilt angle and the measured wind shear.
18. The method in accordance with clause 17, wherein the tilt angle is changed by a horizontal displacement of a counterweight-damper mass.
19. The method in accordance with clause 17 or 18, wherein an actual tilt angle of the rotor axis is measured by a tilt angle detection unit.
20. The method in accordance with any of clauses 17 to 19, wherein a horizontal wind shear is determined by detecting bending moments of the wind turbine about a horizontal axis.
21. The method in accordance with any of clauses 17 to 20, wherein the counterweight-damper mass provides a vibration damping of the drive train.
22. A wind turbine comprising a tiltable drive train, a hub having a longitudinal axis, and a hinge for pivotably supporting the tiltable drive train between at least two tiltable positions being rotatable about the longitudinal axis.
23. The wind turbine in accordance with clause 22, wherein a tilt controller is provided for controlling a tilt between the at least two tiltable positions of the drive train.

## Claims

1. A drive train supporting arrangement (200) for a wind turbine (100) including a drive train, said drive train supporting arrangement (200) comprising:
a hinge connection means (201) adapted for pivotably supporting the drive train;
a self-supporting structure (207) adapted for supporting the hinge connection means (201); and
a first lattice structure (202) adapted for supporting a counterweight mass (203),
the counterweight mass (203) being connected to and acting on the drive train.

2. The drive train supporting arrangement (200) in accordance with claim 1, wherein the counterweight is formed as a counterweight-damper mass (203) which is adapted to tilt the drive train about a horizontal axis.

3. The drive train supporting arrangement (200) in accordance with any preceding claim, wherein the counterweight (203) is connected to the drive train by means of at least one cable.

4. The drive train supporting arrangement (200) in accordance with any preceding claim, wherein the hinge connection means (201) comprises a damping mechanism.

5. The drive train supporting arrangement (200) in accordance with claim 4, wherein the damping mechanism comprises an oil damper unit.

6. The drive train supporting arrangement (200) in accordance with any preceding claim, wherein the counterweight (203) is movable with respect to the drive train such that a variable force may be applied at the drive train.

7. The drive train supporting arrangement (200) in accordance with any preceding claim, wherein a second lattice structure (211) is provided which is adapted for supporting the drive train.

8. The drive train supporting arrangement (200) in accordance with claim 7, wherein the second lattice structure (211) is connected to at least one cable (204) which is connected to the counterweight (203).

9. The drive train supporting arrangement (200) in accordance with any preceding claim, wherein a flexible bellow (209) is provided that connects the drive train to the self-supporting structure (207).

10. The drive train supporting arrangement (200) in accordance with any preceding claim, wherein the drive train supporting arrangement (200) is part of a machine nacelle of the wind turbine (100).

11. The drive train supporting arrangement (200) in accordance with any preceding claim, wherein an anemometer support unit (205) is provided at the first lattice structure (202) and is adapted to support an anemometer (206).

12. The drive train supporting arrangement (200) in accordance with any preceding claim, wherein a speed adapter unit is provided between a rotor and a generator (112) of the wind turbine (100).

13. A method for adjusting a tilt angle of a drive train of a wind turbine (100) comprising a drive train and a drive train supporting arrangement (200), said method comprising:
determining a wind shear at the location of the wind turbine (100);
measuring an actual tilt angle of the drive train of the wind turbine (100); and
changing the tilt angle of the drive train as a function of the actual tilt angle and the measured wind shear.

14. The method in accordance with claim 13, wherein the tilt angle is changed by a horizontal displacement of a counterweight-damper mass (203).

15. The method in accordance with claim 13 or 14, wherein a horizontal wind shear is determined by detecting bending moments (109) of the wind turbine (100) about a horizontal axis.
